# EUROPÄISCHE PATENTANMELDUNG

(11) **EP 3 603 773 A1**
(43) Veröffentlichungstag der Anmeldung: **05.02.2020**
(21) Anmeldenummer: 18186623.7
(22) Anmeldetag: 31.07.2018
(51) Int. Cl.: B01D 53/86, H01B 3/16, H01H 33/22, H01H 33/56, H02B 13/035

(54) **GASISOLIERTE ELEKTRISCHE ANLAGE**

(71) Anmelder: Siemens Aktiengesellschaft, 80333 München (DE)
(72) Erfinder: Hammer, Thomas, 91334 Hemhofen (DE)

(57) **Zusammenfassung**

Die Erfindung betrifft eine gasisolierte elektrische Anlage mit einem Isolierraum (4), in dem ein Isoliermedium (6) vorliegt, das Sauerstoff und Stickstoff und/oder Kohlendioxid umfasst, wobei ein Katalysator (8) im Isolierraum angeordnet ist, der zur Umsetzung von Ozon (O₃) in molekularen Luftsauerstoff (O₂) dient.

## Beschreibung

Bei gasisolierten Schaltanlagen sowohl im Mittelspannungsals auch im Hochspannungsbereich kommt es aufgrund von Teilentladungen und Schaltlichtbögen zur Bildung von Zersetzungsprodukten des Schaltgases bzw. des Isoliergases. Bei der herkömmlichen Verwendung von Schwefelhexafluorid (SF₆) als Isoliermedium von Schaltanlagen stellt diese Zersetzung kein größeres Problem dar, solange es sich um reines SF₆ handelt. Dieses rekombiniert selbst nach Zersetzungen im Lichtbogen wieder zu SF₆. Deshalb werden gasisolierte Schaltanlagen auf SF₆-Basis mit einem Trockenmittel betrieben, das Wasserdampf, der von Wänden oder Bauteilen, insbesondere von Epoxidharz-Isolatoren desorbiert, aufnimmt. Die Bemessung der Trockenmittelmenge ist so gewählt, dass die Lebensdauer der gasisolierten Schaltung von mehr als 30 Jahren damit gewährleistet werden kann. Da das SF₆ jedoch ein sehr hohes Treibhauspotenzial aufweist, wird zunehmend auf alternative Isoliermedien wie beispielsweise trockene, synthetische Luft, also ein Gemisch aus Stickstoff und Sauerstoff und in geringen Mengen Kohlendioxid, oder alternativ Stickstoff-Kohlendioxid-Gemische mit Sauerstoff-Beimengungen zurückgegriffen. Bei derartig betriebenen gasisolierten Schaltanlagen ist die Rekombination von Zersetzungsprodukten zu den ursprünglichen Gaskomponenten weder nach Zersetzung in Teilentladungen noch nach Zersetzung in Lichtbogen gewährleistet. Stattdessen kommt es zur Bildung von Ozon und im Falle eines kohlendioxydhaltigen Gasgemisches auch zur Bildung von Kohlenmonoxid. Diese Zersetzungsprodukte werden von den Trockenmitteln zum Teil nur unvollständig aufgenommen. Die so gebildeten Zersetzungsprodukte können die Isoliereigenschaften negativ beeinflussen, außerdem können sie in bestimmten Konzentrationen toxisch wirken. Bei der Verwendung der genannten Isolierstoffe auf Basis getrockneter Luft, kann es bei gasisolierten Leitungen (GIL) zudem zur Schädigung von bestimmten Dichtmaterialien kommen. Daher ist insgesamt bei gasisolierten elektrischen Anlagen, insbesondere in gasisolierten Leitungen und gasisolierten Schaltanlagen (GIS) die Bildung von schädlichen Zersetzungsprodukten zu reduzieren.

Die Aufgabe der Erfindung besteht darin, eine gasisolierte elektrische Anlage, insbesondere eine GIS oder eine GIL bereitzustellen, die mit einem Isoliermedium auf der Basis von Stickstoff und Sauerstoff befüllt ist und gegenüber dem Stand der Technik im Betrieb eine reduzierte Menge an schädlichen Zersetzungsprodukten aufweist.

Die Lösung der Aufgabe besteht in einer gasisolierten elektrischen Anlage mit den Merkmalen des Patentanspruchs 1.

Die erfindungsgemäße gasisolierte elektrische Anlage gemäß Patentanspruch 1 weist einen Isolierraum auf, in dem ein Isoliermedium vorliegt. Das Isoliermedium umfasst dabei Sauerstoff und Stickstoff und/oder Kohlendioxid. Ferner weist die elektrische Anlage einen Katalysator auf, der im Isolierraum angebracht ist und der zur Umsetzung von Ozon in molekularen Luftsauerstoff dient. Das Anbringen eines Katalysators im Isolierraum führt zur Zersetzung des toxischen Ozons zu Luftsauerstoff und somit zur Rekombination in eine der Komponenten des Isoliermediums. Ferner ist es zweckmäßig, dass der Katalysator gleichzeitig auch dazu geeignet ist, Ozon (O₃) zusammen mit Kohlenmonoxid zu Kohlendioxid und molekularen Luftsauerstoff (O₂) umzuwandeln. Somit werden schädliche Zersetzungsprodukte aus dem Isoliermedium rekombiniert und somit wieder als Ausgangsstoffe bereitgestellt.

Unter dem Begriff Katalysator wird dabei ein Stoff verstanden, der die Kinetik einer bestimmten Reaktion beeinflusst, insbesondere die Reaktionsgeschwindigkeit erhöht. Dabei kann es sich um Mischungen von verschiedenen Materialien handeln, die die besagten Reaktionen selektiv katalytisch unterstützen. Dabei ist es vorteilhaft, wenn das besagte katalytisch wirkende Material, also der Katalysator, eine möglichst große Oberfläche bezogen auf sein Volumen aufweist. Unter dem Begriff Katalysator wird in diesem Zusammenhang lediglich das katalytisch wirkende Material verstanden. Das katalytisch wirkende Material ist aber in der Regel auf einer Trägerstruktur aufgebracht, die wiederum aufgrund ihrer Oberflächenstruktur dazu dient, die möglichst große Oberfläche des katalytisch wirkenden Materials bereitzustellen bzw. zu erzeugen.

Als Katalysatormaterial hat sich insbesondere Platin, Nickel, Ceroxid, Manganoxid und/oder Titanoxid als zweckmäßig herausgestellt. Insbesondere das Manganoxid in seinen Oxidationsstufen +2, +3, +4 und/oder +7 ist als Katalysator zur Umsetzung von Ozon in Sauerstoff besonders geeignet. Als Material für die Trägerstruktur, also die Struktur, die das katalytisch wirkende Material, also den Katalysator trägt, hat sich Aluminiumoxid, Siliciumoxid, Titanoxid, Zirconoxid sowie Zeolithe und/oder Aktivkohle als zweckmäßig herausgestellt.

Als Zusammensetzung für das Isoliermedium hat sich synthetische Luft mit einem Stickstoffanteil zwischen 20 % und 90 %, mit einem Sauerstoffanteil von 0 % und 30 % und im Weiteren mit einem fakultativen Kohlendioxidanteil zwischen 0 % und 60 % als zweckmäßig herausgestellt. Bei den Angaben handelt es sich um Volumenprozentangaben bei Standardbedingungen (20° C, 1013 hPa). Besonders zweckmäßig sind Gasgemische mit einer Zusammensetzung 57 % Stickstoff, 38 % Kohlendioxid sowie 5 % Sauerstoff sowie eine Mischung aus 49 % Kohlendioxid 50,5 % Stickstoff und 0,5 % Sauerstoff, wobei die Zusammensetzungen in ihrem Anteil jeweils um 5 % variieren können.

Als Trägerstruktur des Katalysators, also des katalytisch wirkenden Materials, ist auch eine Innenwand des Isolierraums geeignet. Das bedeutet, dass das Katalysatormaterial auf der Innenwand des Isolierraums aufgebracht ist. Diese dienen dann als Trägerstruktur.

In einer bevorzugten Ausgestaltungsform ist die elektrische Anlage eine gasisolierte Schaltanlage. Dabei kann es insbesondere zweckmäßig sein, dass die gasisolierte Schaltanlage in der Art ausgestaltet ist, dass in dem Isolierraum eine oder mehr Vakuumschaltröhren angeordnet sind. Dabei kann es sich um gasisolierte Schaltanlagen im Mittelspannungs- und im Hochspannungsbereich handeln.

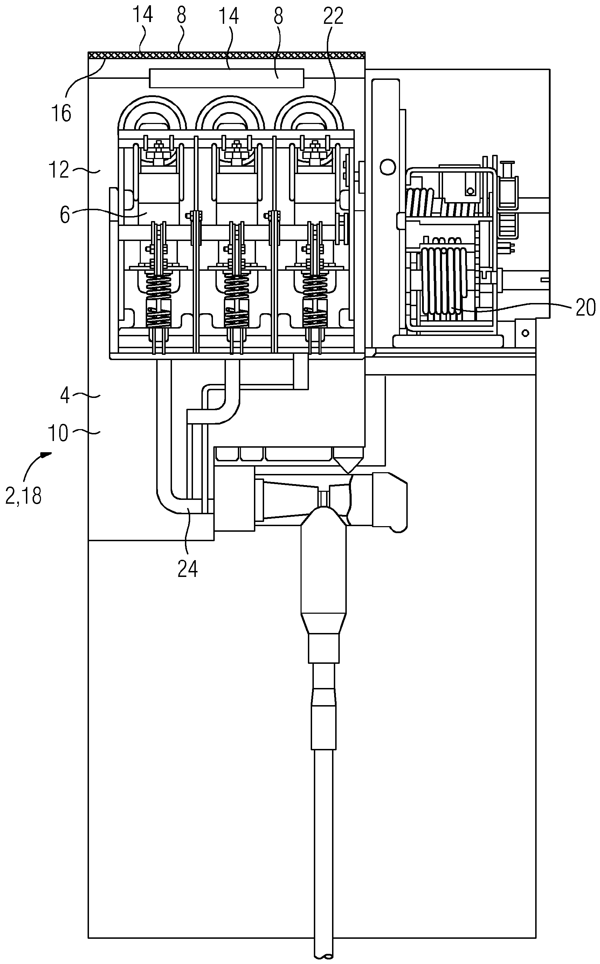

Weitere Ausgestaltungsformen und weitere Merkmale der Erfindung werden anhand der folgenden Figuren näher erläutert. Dabei zeigt:
Die einzige Figur eine gasisolierte Schaltanlage mit einem Isolierraum und darin angeordneten Leistungsschaltern.

Die gasisolierte elektrische Anlage 2, hier ausgestaltet als gasisolierte Schaltanlage 18, weist dabei einen Isolierraum 4 auf, in dem ein Isoliermedium 10 vorliegt. Das Isoliermedium 10 umfasst dabei 57 % Stickstoff, 5 % Sauerstoff (O₂) und 38 % Kohlendioxid. Ein ebenfalls zweckdienliches Isoliermedium 10 ist ein Gasgemisch aus 49 % Kohlendioxid, 5,5 % Stickstoff und Sauerstoff von 0,5 %. Dabei sind in dem Isolierraum 4 drei Vakuumleistungsschalter 6 angeordnet, die mit einem gemeinsamen Antrieb 20 verbunden sind. Sammelschienen 22 und Stromzuleitungen 24 dienen zum Stromtransport zu den Leistungsschaltern 6.

Insbesondere an den Zuleitungen 24 und an den Sammelschienen 22 entstehen hohe Temperaturen, wobei insbesondere auch durch Teilentladungen im Isolierraum 4 das Isoliermedium 10 bzw. dessen Komponenten zersetzt werden können. Dabei kann einerseits Luftsauerstoff (O₂) zu Ozon (O₃) umgewandelt werden. Entsprechend ist es auch möglich, dass vorhandenes Kohlendioxid bei Teilentladungen zu Kohlenmonoxid (CO) reduziert wird, wobei gleichzeitig O₂ zu O₃ oxidiert wird. Bei beiden Reaktionsprodukten handelt es sich um toxische Gase, die bei der Entsorgung der Anlage bzw. beim Nachfüllen oder bei unerwünschtem Austritt für die Umgebung schädlich sein können. Bei der hier dargestellten gasisolierten Anlage 2 in Form einer gasisolierten Schaltanlage 18 handelt es sich lediglich um ein exemplarisches Modell einer Mittelspannungsschaltanlage, die gasisolierte elektrische Anlage 2 kann auch in Form einer gasisolierten Leitung oder einer Hochspannungsschaltanlage mit einem gasisolierten Schalter anstatt einer Vakuumleistungsschaltröhre ausgestattet sein. Insbesondere bei der Anwendung des Isoliermediums 10 in einer gasisolierten Leitung können die beschriebenen Zersetzungsprodukte auch Dichtungen der gasisolierten Leitung angreifen.

Daher ist im Isolierraum 4, insbesondere in einem oberen Drittel 12, eine Trägerstruktur 14 für einen Katalysator 8 vorgesehen. In der Figur sind hierbei zwei Alternativen dargestellt: Zum einen ist die Trägerstruktur 14 in Form eines (nicht näher dargestellten) porösen wabenförmigen Körpers ausgestaltet, der an seiner Oberfläche den Katalysator 8 aufweist. Bei dem katalytisch wirkenden Material des Katalysators 8 handelt es sich um ein Manganoxid, das verschiedene Oxidationsstufen aufweisen kann. Insbesondere die Oxidationsstufen +2, +3, +4 und +7 sind hierbei zweckmäßig. Durch das katalytisch wirkende Material des Katalysators 8 wird das Ozon nach der Gleichung 1

2 O₃ → 3 O₂

zu Luftsauerstoff umgewandelt.

Sollte auch Kohlenmonoxid entstanden sein, so wird Ozon an den beschriebenen Katalysator 8 zusammen mit Kohlenmonoxid gemäß der Gleichung 2

O₃ + CO → CO₂ + O₂

zu Kohlendioxid und Luftsauerstoff umgewandelt. Die jeweiligen entstandenen Reaktionsprodukte sind dabei identisch mit den bereits bestehenden Ausgangsprodukten des Isoliermediums 10. Somit wird zersetztes Isoliermedium 10 zu seinen Ausgangsstoffen durch den Katalysator 8 wieder rekombiniert.

Neben der Bereitstellung einer Trägerstruktur 14 in Form eines wabenförmigen Körpers kann die Trägerstruktur 14 auch identisch mit einer Innenwand 16 des Isolierraums 4 sein. Das heißt, dass der Katalysator 8 durch eine Beschichtung auf die Innenwand 16 aufgebracht ist, womit diese als Trägerstruktur 14 wirkt. Der Katalysator 8 ist dabei bevorzugt im oberen Drittel 12 des Isolierraums 4 angeordnet. Dies ist deshalb zweckmäßig, da mit den Zersetzungen des Isoliermediums 10 bei Teilentladungen auch höhere Temperaturen verbunden sind, wobei das Isoliermedium 10 entsprechend einer Konvektion folgend in das obere Drittel 12 des Isolierraums 4 strömt und somit zwangsweise am Katalysator 8 vorbeiströmt. Beim Vorbeiströmen des Isoliermediums 10 mit seinen Zersetzungsprodukten erfolgen die genannten Reaktionen mit dem Katalysator 8 gemäß der Gleichungen 1 und 2 zur Rekombination der Zersetzungsprodukte.

### Bezugszeichenliste

- 2: gasisolierte elektrische Anlage
- 4: Isolierraum
- 6: Vakuum-Leistungsschalter
- 8: Katalysator
- 10: Isoliermedium
- 12: oberes Drittel
- 14: Trägerstruktur
- 16: Innenwand
- 18: gasisolierte Schaltanlage
- 20: Antrieb
- 22: Sammelschiene
- 24: Zuleitung

## Patentansprüche

1. Gasisolierte elektrische Anlage mit einem Isolierraum (4), in dem ein Isoliermedium (6) vorliegt, das Sauerstoff und Stickstoff und/oder Kohlendioxid umfasst, wobei ein Katalysator (8) im Isolierraum angeordnet ist, der zur Umsetzung von Ozon (O₃) in molekularen Luftsauerstoff (O₂) dient.

2. Gasisolierte elektrische Anlage nach Anspruch 1, **dadurch gekennzeichnet, dass** die Reaktion an einer Katalysatoroberfläche nach der Gleichung
2 O₃ → 3 O₂ erfolgt.

3. Gasisolierte elektrische Anlage nach Anspruch 1 oder 2, **dadurch gekennzeichnet, dass** die Reaktion an einer Katalysatoroberfläche nach der Gleichung
O₃ + CO → CO₂ + O₂ erfolgt.

4. Gasisolierte elektrische Anlage nach einem der Ansprüche 1 bis 3, **dadurch gekennzeichnet, dass** der Katalysator (8) in einem oberen Drittel (12) des Isolierraums (4) angeordnet ist.

5. Gasisolierte elektrische Anlage nach einem der Ansprüche 1 bis 4, **dadurch gekennzeichnet, dass** das Isoliermedium (10) ein Stickstoff-Kohlendioxid-Sauerstoffgemisch mit einem Stickstoffanteil von 20 % - 90 %, einem Kohlendioxidanteil von 0 % und 60 % und einem Sauerstoffanteil von 0 % und 30 % ist.

6. Gasisolierte elektrische Anlage nach Anspruch 5, **dadurch gekennzeichnet, dass** das Isoliermedium (10) eine Zusammensetzung von 57 % Stickstoff, 38 % Kohlendioxid sowie 5 % Sauerstoff aufweist.

7. Gasisolierte elektrische Anlage nach Anspruch 5, **dadurch gekennzeichnet, dass** das Isoliermedium (10) eine Zusammensetzung von 50,5 % Stickstoff, 49 % Kohlendioxid sowie 0,5 % Sauerstoff aufweist.

8. Gasisolierte elektrische Anlage nach einem der Ansprüche 1 bis 5, **dadurch gekennzeichnet, dass** der Katalysator Materialien aus der Gruppe Platin, Nickel, Ceroxid, Manganoxid und/oder Titanoxid umfasst.

9. Gasisolierte elektrische Anlage nach Anspruch 6, **dadurch gekennzeichnet, dass** der Katalysator Manganoxid in einer der Oxidationsstufen +2, +3, +4 und/oder +7 ist.

10. Gasisolierte elektrische Anlage nach einem der Ansprüche 1 bis 7, **dadurch gekennzeichnet, dass** eine den Katalysator (8) tragende Trägerstruktur (14) das/die Materialien Aluminiumoxid, Siliziumoxid, Titanoxid, Zirkonoxid, Zeolite und oder Aktivkohle umfasst.

11. Gasisolierte elektrische Anlage nach einem der Ansprüche 1 bis 7, **dadurch gekennzeichnet, dass** der Katalysator (8) an einer Innenwand (16) des Isolierraums (4) aufgebracht ist.

12. Gasisolierte elektrische Anlage nach einem der Ansprüche 1 bis 9, **dadurch gekennzeichnet, dass** die elektrische Anlage (2) eine gasisolierte Schaltanlage (16) ist.

13. Gasisolierte elektrische Anlage nach Anspruch 10, **dadurch gekennzeichnet, dass** im Isolierraum (4) eine Vakuumschaltröhre (6) angeordnet ist.
